# EUROPÄISCHE PATENTSCHRIFT

(11) **EP 2 096 740 B1**
(45) Veröffentlichungstag und Bekanntmachung des Hinweises auf die Patenterteilung: **19.06.2019**
(21) Anmeldenummer: 08003837.5
(22) Anmeldetag: 29.02.2008
(51) Int. Cl.: H02K 15/00, H02K 15/12, H02K 5/128

(54) **Vergusskörper**
Moulded body
Corps moulé

(43) Veröffentlichungstag der Anmeldung: 02.09.2009
(73) Patentinhaber: Grundfos Management a/s, 8850 Bjerringbro (DK)
(72) Erfinder: Kriegbaum Sørensen, Ole, 8850 Bjerringbro (DK)
(74) Vertreter: Patentanwälte Vollmann Hemmer Lindfeld Partnerschaft mbB

(56) Entgegenhaltungen:
- DE-A1- 2 541 499
- DE-B- 1 282 157
- DE-C1- 19 902 837
- GB-A- 1 322 760
- JP-A- 7 075 280
- JP-A- 2000 263 587
- JP-A- 2005 253 245
- US-A- 4 492 884

## Beschreibung

Die Erfindung betrifft ein Gehäuse mit einem Vergusskörper, der mindestens ein elektrisches und/oder elektronisches Bauteil einbettet.

Es zählt zum Stand der Technik, elektrische und/oder elektronische Bauteile in einen Vergusskörper einzubetten, um diese räumlich innerhalb einer Vorrichtung festzulegen, gegen äußere Einflüsse zu schützen, zur besseren Wärmeabfuhr oder auch aus anderen Gründen. So zählt es z.B. bei Elektromotoren insbesondere kleiner Baugröße, wie sie beispielsweise zum Antrieb von Kreiselpumpen eingesetzt werden, zum Stand der Technik, den Stator innerhalb des Motorgehäuses in eine Vergussmasse einzubetten. Solche Vergusskörper nach dem Stand der Technik sind aus Epoxidharz gefertigt, d. h. einen Kunststoff, der im Verarbeitungszustand flüssig ist und so auf einfache Weise vergossen werden kann. Diese Flüssigkeit sucht ihren Weg auch in kleinste Zwischenräume und umschließt den Stator, insbesondere die Wicklungsköpfe des Stators vollständig und legt diese im Motorgehäuse fest. Nach dem Vergießen härtet der Kunststoff aus und bildet so einen Vergusskörper.

Es zählt weiter zum Stand der Technik, den Kunststoff mit Füllstoffen anzureichern, zum einen um die Menge des eingesetzten und vergleichsweise kostenaufwändigen Kunststoffs zu reduzieren und zum andern um die Materialeigenschaften des Vergusskörpers zu beeinflussen. So zählt es beispielsweise zum Stand der Technik, dem Kunststoff Fasern beizumengen um die Zugfestigkeit zu erhöhen oder Füllkörper um das spezifische Gewicht zu erhöhen oder auch zu vermindern. Derartige Vergusskörper haben sich bewährt, allerdings ist es häufig sehr aufwändig, wenn überhaupt wirtschaftlich möglich am Lebensende des den Vergusskörper aufweisenden Bauteils diesen von dem elektrischen und/oder elektronischen Bauteil zu trennen und einer Wiederverwertung oder gezielten Entsorgung zuzuführen. Eine Trennung von Kunststoff und Füllstoff ist in der Regel gar nicht möglich. GB 1322760 A zeigt einen derartigen Stand der Technik.

Vor diesem Hintergrund liegt der Erfindung die Aufgabe zugrunde, einen Vergusskörper zu schaffen, der einerseits die eingangs aufgeführten und vom Vergusskörper gewünschten Eigenschaften aufweist, der jedoch andererseits kostengünstig herzustellen und zu recyceln, d. h. in seine Komponente zu zerlegen ist. Zusätzlich ist die Wärmeabfuhr aus dem Bauteil zu verbessern. Der Vergusskörper soll insbesondere zur Einbettung eines Motors, typischerweise des Stators einer Tauchpumpe einsetzbar sein.

Diese Aufgabe wird durch ein Gehäuse mit einem Vergusskörper und einem elektrischen oder elektronischen Bauteil gemäß den im Anspruch 1 angegebenen Merkmalen gelöst. Vorteilhafte Ausgestaltungen der Erfindung sind in den Unteransprüchen sowie der nachfolgenden Beschreibung angegeben.

Der erfindungsgemäße Vergusskörper weist ein thermoplastisches Bindemittel und mindestens einen Füllstoff auf. Die Erfindung ist nicht auf ein einziges thermoplastisches Bindemittel beschränkt, es können auch mehrere thermoplastische Bindemittel Einsatz finden, auch können ein oder mehrere Füllstoffe sowie weitere Stoffe Teil des Vergusskörpers bilden. Grundgedanke des erfindungsgemäßen Vergusskörpers ist es, ein thermoplastisches Bindemittel vorzusehen, sodass durch Erhitzen des Vergusskörpers über den Schmelzpunkt des Bindemittels hinaus das Bindemittel vom Füllstoff und vom elektrischen und/oder elektronischen Bauteil wieder entfernt werden kann, um damit auch Füllstoff und elektrisches und/oder elektronisches Bauteil voneinander trennen und diese gesondert einer Wiederverwertung oder gezielten Entsorgung zuführen zu können. Zum Auflösen des erfindungsgemäßen Vergusskörpers ist es daher lediglich erforderlich, diesen über eine bestimmte Temperatur oder einen bestimmten Temperaturbereich hinaus zu erwärmen, soweit, dass das Bindemittel flüssig wird, und durch Schwerkraft oder unterstützt durch eine Pumpe abfließen und damit den Vergusskörper auflösen kann. Dies ist möglich, wenn der Vergusskörper, wie dies typischerweise bei Motoren, insbesondere der vorgenannten Tauchpumpenanwendung der Fall ist, in einen beispielsweise metallischen Gehäuse eingegliedert ist. Dann können durch entsprechendes Erhitzen und weitgehendes Entfernen des Bindemittels Gehäuse, Bauteil und Füllstoff voneinander getrennt werden, da sie dann aufgrund des dann durch Abfließen fehlenden Bindemittels nicht mehr miteinander verbunden sind. Dabei kann ein mehrstufiges Bindemittelsystem vorgesehen sein, dergestalt, dass bei Überschreiten einer ersten Temperatur der aus Bindemittel und Füllstoff bestehende Vergusskörper sich verflüssigt und vom elektrischen und/oder elektronischen Bauteil durch Schwerkraft oder Pumpenunterstützt getrennt werden kann, und dass bei Erreichen einer darüber liegenden Temperatur eine Trennung von Füllstoff und Bindemittel möglich ist, wenn sich beispielsweise das Bindemittel noch weiter verflüssigt.

Der erfindungsgemäße Vergusskörper beschränkt sich nicht auf die Anwendung bei Motoren, und ist innerhalb eines Gehäuses vorgesehen. Der Vergusskörper bettet sowohl elektrische als auch elektronische Bauteile oder beides ein. Er ist somit auch als Vergusskörper für elektronische Schaltungen, Baugruppen und Bauteile geeignet, beispielsweise auch zur Einbettung der Frequenzumrichterelektronik einer Pumpe oder Teilen davon.

In besonders vorteilhafter Ausgestaltung der Erfindung besteht das Bindemittel des Vergusskörpers aus Wachs, und zwar vorzugsweise aus niedrigmolekularen Polyolefinen. Ein solcher Vergusskörper eignet sich insbesondere für Anordnungen in einem geschlossenen Gehäuse, wie dies bei Motoren von Tauchpumpen aber auch anderen Umwälzpumpen der Fall ist. Wachs ist ein kostengünstiger, in der Fertigung einfach zu handhabender und ebenso einfach am Ende des Produktlebens wieder zu gewinnender Stoff, der in der Regel umweltverträglich und daher aus Umweltgesichtspunkten völlig unproblematisch ist. Dabei hat sich herausgestellt, dass niedrigmolekulare Polyolefine für den Verguss von Motoren besonders geeignet sind, da diese deutlich geringere temperaturbedingte Volumenänderungen aufweisen, als dies bei anderen Wachsen der Fall ist.

Als Füllstoff für den erfindungsgemäßen Vergusskörper sind eine Vielzahl von Stoffen denkbar, so können metallische Füllstoffe zur Erhöhung der Wärmeleitfähigkeit, Faserfüllstoffe zur Erhöhung der Zugfestigkeit oder besonders leichte oder bzw. besonders schwere Füllstoffe zur Beeinflussung desspezifischen Gewicht des Vergusskörpers eingesetzt werden, auch in Kombination. Insbesondere für den vorgenannten Einsatz zur Herstellung eines Vergusskörpers für den Motor einer Pumpe aber auch für andere Einsatzbereiche hat sich Sand als Füllstoff bestens bewährt. Es ist deshalb vorteilhaft, wenn der Füllstoff aus Sand oder zumindest im Wesentlichen aus Sand gebildet ist, vorzugsweise Quarzsand. Sande sind in unterschiedlichen Korngrößen und Eigenschaften verfügbar, sie sind typischerweise kostengünstig, als schüttfähige Stoffe einfach zu handhaben und bestens umweltverträglich, sodass auch beim späteren Recyceln keine besonderen Vorkehrungen beim Trennen und Auffangen der Materialen vorgenommen werden müssen. Mit Sand als Füllstoff kann zudem eine gute Wärmeleitfähigkeit und hohe Festigkeit des Vergusskörpers, insbesondere Druckfestigkeit gewährleistet werden.

Als Füllstoffe bewehrt haben sich beispielsweise auch Aluminiumoxid, Aluminiumhydrat, Kaolin und Kreide.

Dabei hat sich insbesondere für den Verguss von Statorköpfen Sand mit einer mittleren Korngröße zwischen 0,2 und 0,4 mm als vorteilhaft erwiesen. Diese Korngröße ermöglicht eine gute Schüttbarkeit des Sandes, sodass sich dieser gleichmäßig und ggf. durch Rütteln, dicht verteilt, andererseits jedoch ein so offenporiges Gebilde bildet, sodass das Bindemittel noch dazwischen gelangt und somit einen Verbund des Vergusskörpers im Wesentlichen das gesamte Volumen sicherstellt. Es versteht sich, dass die Abstimmung der Korngröße in Abhängigkeit des Viskosität des Bindemittels erfolgen muss und auch abhängig vom Herstellungsverfahren des Vergusskörpers ist, auf das weiter unten eingegangen wird.

Der Füllstoff sollte gemäß einer vorteilhaften Weiterbildung der Erfindung so ausgebildet und angeordnet sein, dass er nach dem Schütten und ggf. Rütteln nach Art eines Kugelhaufens angeordnet ist, d. h. dass die Füllstoffteile, also bei Sand beispielsweise die Sandkörner unmittelbar aneinander anstoßen, jedoch Freiräume bilden, die vom Bindemittel durchsetzt werden können. Durch den Einsatz des Bindemittels wird ein inniger Verbund erzielt, durch die kugelhaufenartige Anordnung eine hohe Druckfestigkeit erreicht. Sie gewährt zudem, dass beim Schmelzen des Bindemittels im Betrieb der Verbund und die Druckfestigkeit des Vergusskörpers nicht völlig aufgehoben wird, wenn der Vergusskörper erfindungsgemäß in einem umgebenden Gehäuse angeordnet ist.

Um zu verhindern, dass bei Wärmedehnungen Bauteile einen unzulässig hohen Druck ertragen müssen, ist gemäß einer Weiterbildung der Erfindung vorgesehen, neben dem oder den Füllstoffen ein Kompensationsmittel zum Ausgleich von wärmebedingten Volumenänderungen des Füllstoffs und/oder des Bindemittels vorzusehen. Ein solches Kompensationsmittel kann Teil des Füllstoffs bilden und durch elastische Kunststoffpartikel gebildet sein oder auch durch andere geeignete Materialien.

Vorteilhaft weist der Vergusskörper ggf. auch ein oder mehrere Hilfsmittel auf. Derartige Hilfsmittel dienen typischerweise zur besseren Verarbeitung der eingesetzten Stoffe. Hierzu zählen beispielsweise Thixotrope, welche eine niedrige Dichte und große Oberfläche haben und dazu dienen können, die Füllstoffe innerhalb des Bindemittels in Schwebe zu halten. Dies ist insbesondere dann zweckmäßig, wenn die Füllstoffe eine sehr kleine Korngröße aufweisen und vor dem Einbringen in Gussform oder das Gehäuse mit dem Bindemittel vermischt werden müssen.

Es wird jedoch erfindungsgemäß ein Bindemittel gewählt werden, dessen Schmelzpunkt unter der maximal zulässigen Betriebstemperatur des eingebetteten Bauteils liegt. Eine solche Dimensionierung hat den Vorteil, dass dort, wo ein Bauteil besonders heiß wird, das Bindemittel zumindest teilweise vom festen in den flüssigen Zustand übertritt, wodurch die Wärmeleitwirkung und somit die Wärmeabfuhr von diesem Bauteil verbessert werden kann. Es können also thermische Spitzen innerhalb einer Vorrichtung durch entsprechende Dimensionierung des Bindemittels gezielt abgebaut oder zumindest abgeflacht werden. Erfindungsgemäß werden in solchen Bereichen Stützkörper eingegliedert, die den mechanischen Halt unterstützen.

Unter zulässiger Betriebstemperatur im Sinne der vorstehenden Ausführungen und der Erfindung ist die Temperatur zu verstehen, unter der das Bauteil, bzw. die Vorrichtung ihren bestimmungsgemäßen Betrieb ausführt. Unter zulässiger Temperatur ist hingegen die Temperatur zu verstehen, die ein Bauteil ertragen kann, ohne nachhaltig Schaden zu nehmen. So ist typischerweise bei Halbleiterbauelementen die maximale Betriebstemperatur, d.h. die Temperatur, unter welcher diese Bauelemente bestimmungsgemäß arbeiten, deutlich geringer, als die zulässige Temperatur, d.h. die Temperatur, die die Bauelemente außer Funktion ertragen können, um später bei Absinken der Temperatur unter die zulässige Betriebstemperatur wieder bestimmungsgemäß arbeiten zu können.

Der Vergusskörper kann neben Bindemittel, Füllstoff, Kompensationsstoffen und dergleichen auch weitere Komponenten aufweisen, wie beispielsweise Antioxidantien, welche insbesondere die umgebenden Bauteile schützen oder gezielt beeinflussen.

Der erfindungsgemäße Vergusskörper ist in einem ungebenden Gehäuse angeordnet, welches eine zusätzliche Sicherheit gegen temperaturbedingtes Entweichen von Bindemittel aus dem Vergusskörper bildet. Besonders vorteilhaft wird der erfindungsgemäße Vergusskörper zum Einbetten des Stators eines Elektromotors innerhalb eines Motorgehäuses eingesetzt, beispielsweise des Elektromotors einer Tauchpumpe. Hier hat der Vergusskörper unter anderem die Aufgabe, den Stator innerhalb des Motorgehäuses allseits abzustützen und zu fixieren, die im Stator entstehende Wärme an das Motorgehäuse abzuführen und die sonst im Motorgehäuse gebildeten Freiräume gewichtsmäßig zu füllen, damit ein zuverlässiges Absinken der Tauchpumpe in Wasser oder anderen Flüssigkeiten gewährleistet ist. Dies ist in besonders vorteilhafter Weise durch Einsatz eines Vergusskörpers möglich, der Wachs als Bindemittel und Sand als Füllstoff aufweist.

In einem Beispiel, welches nicht zur Erfindung gehört, ist zur Fertigung des erfindungsgemäßen Vergusskörpers vorgesehen, ein elektrisches und/oder elektronisches Bauteil oder ggf. auch mehrere solcher Bauteile in einem Gehäuse oder in einer Gussform anzuordnen und den zwischen dem oder den Bauteilen verbleibenden Freiraum mit Füllstoff und anschließend mit über den Schmelzpunkt erwärmten Bindemittel zu füllen. Zwar ist grundsätzlich auch eine gleichzeitige Befüllung des Freiraums mit Bindemittel und Füllstoff denkbar, gemäß dem Beispiel ist jedoch das vorbeschriebene Verfahren besonders vorteilhaft, da hierdurch ein besonders dichter und somit druckfester Vergusskörper geschaffen werden kann. Insbesondere in der Großserienfertigung ist dieses Verfahren von Vorteil, da es keine kritischen einzuhaltenden Prozesszeiten aufweist. Das Füllen und ggf. Verdichten des Füllstoffs erfolgt in einem ersten Schritt wonach in einem zweiten Schritt ein Gehäuse oder eine Gussform mit den darin befindlichen Bauteilen, dem Füllstoff und ggf. weiter darin befindlichen Stoffen und Körpern so lange erwärmt werden, bis sie eine Temperatur aufweisen, die vorzugsweise über der Temperatur des Schmelzpunktes des Bindemittels liegt. Erst dann wird das Bindemittel, das zweckmäßigerweise ebenfalls auf mindestens diese Temperatur zuvor erwärmt worden ist, eingefüllt. Es ist somit nicht zu befürchten, dass das Bindemittel beim Einfüllen erstarrt, es kann vielmehr der Prozess so gesteuert werden, dass sich das Bindemittel gleichmäßig um und durch den Füllstoff sowie die eingebetteten Bauteile verteilt und erst in einem nachfolgenden Abkühlprozess erstarrt.

Um eine hohe Packungsdichte des Füllstoffs zu erreichen, ist es zweckmäßig, nach dem Befüllen den Füllstoff zur Erzeugung mechanischer Schwingungen zu rütteln, um diesen zu verdichten, wie dies an sich bekannt ist. Um möglichst geringe Gaseinschlüsse im Vergusskörper sicherzustellen, ist das beispielhafte Fertigungsverfahren so ausgestaltet, dass vor dem Befüllen mit Bindemittel das Gehäuse bzw. die Gussform evakuiert bzw. teilevakuiert wird, um Gas weitgehend zu entfernen. Das dann zugeführte Bindemittel verteilt sich vollständig und gleichmäßig in die zwischen dem Füllstoff gebildeten Hohlräume. Das Verfahren kann noch dadurch weiter optimiert werden, dass auch während des Befüllens mit Bindemittel eine weitere Evakuierung des Gehäuses oder der Gussform erfolgt, wobei zweckmäßigerweise das Bindemittel von unten zugeführt und von oben evakuiert wird, also die natürliche Gasableitung unterstützt wird.

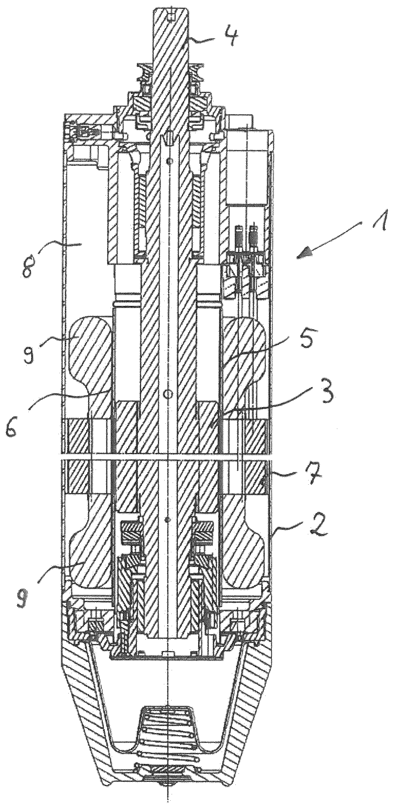

Eine erfindungsgemäße Anwendung ist nachfolgend beispielhaft dargestellt. Die Zeichnung zeigt einen Längsschnitt durch einen Tauchmotor, der zur Verbindung mit einer Tauchpumpe zum Unterwassereinsatz vorgesehen ist. Der Tauchmotor 1 weist ein geschlossenes nach außen hermetisch abgeschlossenes Gehäuse 2 auf, in dem ein Spaltrohrmotor angeordnet ist, dessen Rotor 3 auf der Antriebswelle 4 des Motors sitzt. Umgeben, räumlich getrennt durch ein Spaltrohr, wird der Rotor 3 von einem Stator 6, der in einem Statorblechpaket 7 eingegliedert ist. In der Zeichnung sind die Wicklungsköpfe 9 des Stators 6 sichtbar. Der Freiraum zwischen Gehäuse 2 und Stator 6, d. h. den Wicklungsköpfen 9 und dem Statorblechpaket 7 ist durch einen Vergusskörper 8 der vorbeschriebenen Art ausgefüllt. Der Vergusskörper 8 umgibt die Wicklungsköpfe 9 sowie die Stirnseiten des Statorblechpakets 7 und schließt bis an die Innenseite des Gehäuses 2 an, stellt somit eine mechanische und auch wärmeleitende Verbindung zwischen Motorwicklung und Motorgehäuse 2 dar.

## Patentansprüche

1. Gehäuse mit einem Vergusskörper (8), welcher mindestens ein elektrisches und/oder elektronisches Bauteil (6) in besagtem, das Bauteil umgebenden Gehäuse (2) einbettet, wobei der Vergusskörper ein thermoplastisches Bindemittel und mindestens einen Füllstoff aufweist, **dadurch gekennzeichnet, dass** das Bindemittel einen Schmelzpunkt aufweist, der unter der maximal zulässigen Betriebstemperatur des eingebetteten Bauteils (6) liegt und dass Stützkörper in Bereichen, wo das Bauteil besonders heiß wird, vorgesehen sind, die den mechanischen Halt des Bauteils (6) unterstützen.

2. Vergusskörper (8) nach Anspruch 1, **dadurch gekennzeichnet, dass** das Bindemittel aus Wachs besteht, vorzugsweise aus niedrigmolekularen Polyolefinen.

3. Vergusskörper (8) nach einem der vorhergehenden Ansprüche, **dadurch gekennzeichnet, dass** der Füllstoff aus Sand oder zumindest im Wesentlichen aus Sand, vorzugsweise Quarzsand gebildet ist.

4. Vergusskörper (8) nach einem der vorhergehenden Ansprüche, **dadurch gekennzeichnet, dass** der Füllstoff eine mittlere Korngröße zwischen 0,2 und 0,4 mm aufweist.

5. Vergusskörper (8) nach einem der vorhergehenden Ansprüche, **dadurch gekennzeichnet, dass** der Füllstoff nach Art eines Kugelhaufens angeordnet ist.

6. Vergusskörper (8) nach einem der vorhergehenden Ansprüche, **dadurch gekennzeichnet, dass** er ein Kompensationsmittel zum Ausgleich von wärmebedingten Volumenänderungen des Füllstoffs und/oder des Bindemittels aufweist.

7. Vergusskörper (8) nach einem der vorhergehenden Ansprüche, **dadurch gekennzeichnet, dass** er Thixotrope aufweist.

8. Vergusskörper (8) nach einem der vorhergehenden Ansprüche, **dadurch gekennzeichnet, dass** er Antioxidantien aufweist.

9. Vergusskörper (8) nach einem der vorhergehenden Ansprüche, **dadurch gekennzeichnet, dass** er den Stator (6) eines Elektromotors innerhalb eines Motorgehäuses (2) einbettet.

## Claims

1. A casing with a casting body (8) for embedding at least one electrical and/or electronic component (6) in the surrounding casing (2), wherein the casing body comprises a thermoplastic binding agent and at least one filler, **characterised in that** the binding agent has a melting point which lies above the maximal allowable operating temperature of the embedded component (6) and that supporting bodies are provided in the areas where the component gets particularly hot, these supporting bodies support the mechanical hold of the component (6).

2. A casting body (8) according to claim 1, **characterised in that** the binding agent consists of wax, preferably of low-molecular polyorefins.

3. A casting body (8) according to one of the preceding claims, **characterised in that** the filler is formed of sand or at least essentially of sand, preferably quartz sand.

4. A casting body (8) according to one of the preceding claims, **characterised in that** the filler has an average grain size between 0.2 and 0.4 mm.

5. A casting body (8) according to one of the preceding claims, **characterised in that** the filler is arranged in the manner of a ball cluster.

6. A casting body (8) according to one of the preceding claims, **characterised in that** it comprises a compensation agent for the compensation of thermally induced volume changes of the filler and/or of the binding agent.

7. A casting body (8) according to one of the preceding claims, **characterised in that** it comprises thixotropics.

8. A casting body (8) according to one of the preceding claims, **characterised in that** it comprises antioxidants.

9. A casting body (8) according to one of the preceding claims, **characterised in that** it embeds the stator (6) of an electric motor within a motor housing (2).

## Revendications

1. Carter comprenant un corps moulé (8) qui incorpore au moins un composant électrique et/ou électronique (6) dans ledit carter (2) entourant le composant, le corps moulé comportant un liant thermoplastique et au moins une matière de charge, **caractérisé en ce que** le liant présente un point de fusion qui se situe au-dessous de la température de service maximale admissible du composant incorporé (6) et **en ce que** sont prévus des corps d'appui dans des zones où le composant devient particulièrement chaud, qui contribuent à la tenue mécanique du composant (6).

2. Corps moulé (8) selon la revendication 1, **caractérisé en ce que** le liant se compose de cire, de préférence de polyoléfines de faible masse moléculaire.

3. Corps moulé (8) selon l'une des revendications précédentes, **caractérisé en ce que** la matière de charge est formée de sable ou au moins essentiellement de sable, de préférence de sable silicieux.

4. Corps moulé (8) selon l'une des revendications précédentes, **caractérisé en ce que** la matière de charge a une granulométrie moyenne comprise entre 0,2 et 0,4 mm.

5. Corps moulé (8) selon l'une des revendications précédentes, **caractérisé en ce que** la matière de charge est disposée à la manière d'un lit de boulets.

6. Corps moulé (8) selon l'une des revendications précédentes, **caractérisé en ce qu'**il présente un agent de compensation destiné à compenser des variations de volume de la matière de remplissage et/ou du liant dues à la chaleur.

7. Corps moulé (8) selon l'une des revendications précédentes, **caractérisé en ce qu'**il contient des agents thixotropes.

8. Corps moulé (8) selon l'une des revendications précédentes, **caractérisé en ce qu'**il contient des antioxydants.

9. Corps moulé (8) selon l'une des revendications précédentes, **caractérisé en ce qu'**il incorpore le stator (6) d'un moteur électrique à l'intérieur d'un carter de moteur (2).
